# EUROPEAN PATENT SPECIFICATION

(11) **EP 4 151 525 B1**
(45) Date of publication and mention of the grant of the patent: **09.08.2023**
(21) Application number: 22187992.7
(22) Date of filing: 31.07.2022
(51) Int. Cl.: B64U 101/60, B64C 29/02

(54) **CONVERTIBLE STAGGERWING AIRCRAFT HAVING OPTIMIZED HOVER POWER**
SENKRECHTSTARTENDES UND -LANDENDES FLUGZEUG MIT GESTAFFELTEN FLÜGELN UND OPTIMIERTER SCHWEBELEISTUNG
AÉRONEF CONVERTIBLE À AILES DÉCALÉES PRÉSENTANT UNE PUISSANCE DE VOL STATIONNAIRE OPTIMISÉE

(30) Priority: 21.09.2021 US 202117481110
(43) Date of publication of application: 22.03.2023
(73) Proprietor: Textron Innovations Inc., Providence, Rhode Island 02903 (US)
(72) Inventor: SCHAFER, Steven Ryan, Fort Worth, 76107 (US)
(74) Representative: Barker Brettell LLP

(56) References cited:
- WO-A1-2016/005954
- CN-A- 107 757 876
- US-A1- 2014 097 290
- US-A1- 2019 263 516
- US-A1- 2020 317 332

## Description

### TECHNICAL FIELD OF THE DISCLOSURE

The present disclosure relates, in general, to aircraft configured to convert between thrust-borne lift in a VTOL orientation and wing-borne lift in a biplane orientation and, in particular, to aircraft having a staggerwing configuration with laterally and longitudinally offset rotors that increases the total available rotor disk area thereby reducing the required hover power.

### BACKGROUND

Unmanned aircraft systems (UAS), also known as unmanned aerial vehicles (UAV) or drones, are self-powered aircraft that do not carry a human operator, uses aerodynamic forces to provide vehicle lift, are autonomously and/or remotely operated, may be expendable or recoverable and may carry lethal or nonlethal payloads. UAS are commonly used in military, commercial, scientific, recreational and other applications. For example, military applications include intelligence, surveillance, reconnaissance and attack missions. Civil applications include aerial photography, search and rescue missions, inspection of utility lines and pipelines, humanitarian aid including delivering food, medicine and other supplies to inaccessible regions, environment monitoring, border patrol missions, cargo transportation, forest fire detection and monitoring, accident investigation and crowd monitoring, to name a few.

Fixed-wing aircraft, such as airplanes, are capable of flight using wings that generate lift responsive to the forward airspeed of the aircraft, which is generated by forward thrust from one or more jet engines or propellers. The wings generally have an airfoil cross section that generates the lift force to support the airplane in flight. Fixed-wing aircraft, however, typically require a runway for takeoff and landing. Unlike fixed-wing aircraft, vertical takeoff and landing (VTOL) aircraft do not require runways. Instead, VTOL aircraft are capable of taking off, hovering and landing vertically. One example of VTOL aircraft is a helicopter which is a rotorcraft having one or more rotors that provide vertical thrust to enable VTOL operations as well as lateral thrust to enable forward, backward and sideward flight. These attributes make helicopters highly versatile for use in congested, isolated or remote areas where fixed-wing aircraft may be unable to takeoff or land. A tiltrotor aircraft is another example of a VTOL aircraft. Tiltrotor aircraft generate vertical and forward thrust using proprotors that are typically coupled to nacelles mounted near the ends of a fixed wing. The nacelles rotate relative to the fixed wing such that the proprotors have a generally horizontal plane of rotation for VTOL operations and a generally vertical plane of rotation for forward flight during which the fixed wing provides lift.

US 2014/097290 A1 describes an aerial vehicle including at least one wing, a plurality of thrust producing elements on the at least one wing, a plurality of electric motors equal to the number of thrust producing elements for individually driving each of the thrust producing elements, at least one battery for providing power to the motors, and a flight control system to control the operation of the vehicle.

US 2020/317332 A1 describes an Airborne Urban Mobility Vehicle with VTOL (Vertical Take-Off and Landing) capability. The aircraft has a fuselage freely pivoted between lateral arms of a yoke; the arms of the yoke extending fore and aft and, at or towards the extremities of the arms. The respective fore portions are linked laterally together by an aerofoil; and the respective aft portions are linked laterally together by an aerofoil; and at least one of the fore and aft aerofoils having mounted thereon one or more propulsion units.

CN 107757876 A describes an aircraft which comprises a body, a front wing, a rear wing, a first power package. The rear wing and the front wing are staggered in an x-axis direction and a z-axis direction, and the first power package and the second power package are arranged symmetrically along a y-axis direction.

US 2019/263516 A1 describes an aircraft having a vertical takeoff and landing fight mode and a forward flight mode. The aircraft includes an airframe with first and second M-wings having first and second pylons extending therebetween, each M-wing forming a pair of leading apexes with swept forward and swept back portions extending therefrom at a swept angle.

WO 2016/005954 A1 describes remotely piloted aircrafts, with propeller propulsion, able to perform vertical take-off and landing. In particular, the document relates to "tail-sitter" aircraft; aircraft that perform take-off with wings, fuselage (if existing) and propelling plant in vertical attitude and with thrust directed upwards.

### SUMMARY

In a first aspect, the present disclosure is directed to an aircraft operable to transition between thrust-borne lift in a VTOL orientation and wing-borne lift in a biplane orientation. The aircraft includes an airframe having first and second wings in a staggerwing configuration with first and second swept pylons extending therebetween. A distributed thrust array is attached to the airframe. The thrust array includes a first plurality of propulsion assemblies coupled to the first wing and a second plurality of propulsion assemblies coupled to the second wing, each of the propulsion assemblies including a tailboom. A plurality of tail surfaces each extends between the tailbooms of one of the propulsion assemblies of the first plurality of propulsion assemblies and one of the propulsion assemblies of the second plurality of propulsion assemblies. A flight control system is coupled to the airframe and is configured to independently control each of the propulsion assemblies. The first plurality of propulsion assemblies is longitudinally offset relative to the second plurality of propulsion assemblies such that rotors of the first plurality of propulsion assemblies rotate in a different plane than rotors of the second plurality of propulsion assemblies.

In some embodiments, in the biplane orientation, the first wing may be an upper wing and the second wing may be a lower wing. In such embodiments, the first wing may be forward of the second wing, in the biplane orientation. Alternatively, the first wing may be aft of the second wing, in the biplane orientation. In certain embodiments, the first wing may have a decalage angle relative to the second wing such as a positive decalage angle relative to the second wing. In some embodiments, in the biplane orientation, the rotors of the first plurality of propulsion assemblies may be forward of the rotors of the second plurality of propulsion assemblies. In other embodiments, in the biplane orientation, the rotors of the first plurality of propulsion assemblies may be aft of the rotors of the second plurality of propulsion assemblies.

In certain embodiments, the propulsion assemblies of the first plurality of propulsion assemblies may be laterally offset relative to the propulsion assemblies of the second plurality of propulsion assemblies. For example, the propulsion assemblies of the first plurality of propulsion assemblies may be laterally offset inboard relative to the propulsion assemblies of the second plurality of propulsion assemblies or the propulsion assemblies of the first plurality of propulsion assemblies may be laterally offset outboard relative to the propulsion assemblies of the second plurality of propulsion assemblies. In some embodiments, when the gap between the first wing and the second wing has a length G, the radius of each of the rotors may be greater than G. In certain embodiments, each of the rotors may shares a common radius. In other embodiments, certain of the rotors may have a different radius.

In some embodiments, each of the tail surfaces may operate as ruddervators.

### BRIEF DESCRIPTION OF THE DRAWINGS

For a more complete understanding of the features and advantages of the present disclosure, reference is now made to the detailed description along with the accompanying figures in which corresponding numerals in the different figures refer to corresponding parts and in which:
Figures 1A-1F are schematic illustrations of a convertible aircraft having a staggerwing configuration in accordance with embodiments of the present disclosure;
Figures 2A-2I are schematic illustrations of a convertible aircraft having a staggerwing configuration in a sequential flight operating scenario in accordance with embodiments of the present disclosure;
Figure 3 is a systems diagram of a convertible aircraft having a staggerwing configuration in accordance with embodiments of the present disclosure;
Figure 4 is a block diagram of autonomous and remote control systems for a convertible aircraft having a staggerwing configuration in accordance with embodiments of the present disclosure;
Figures 5A-5B are schematic illustrations of a convertible aircraft having a staggerwing configuration in accordance with embodiments of the present disclosure;
Figures 6A-6B are schematic illustrations of a convertible aircraft having a staggerwing configuration in accordance with embodiments of the present disclosure;
Figures 7A-7B are schematic illustrations of a convertible aircraft having a staggerwing configuration in accordance with embodiments of the present disclosure;
Figures 8A-8B are schematic illustrations of a convertible aircraft having a staggerwing configuration in accordance with an example not forming part of the presently claimed invention, but which may be useful for understanding features thereof; and
Figures 9A-9B are schematic illustrations of a convertible aircraft having a staggerwing configuration in accordance with an example not forming part of the presently claimed invention, but which may be useful for understanding features thereof.

### DETAILED DESCRIPTION

While the making and using of various embodiments of the present disclosure are discussed in detail below, it should be appreciated that the present disclosure provides many applicable inventive concepts, which can be embodied in a wide variety of specific contexts. The specific embodiments discussed herein are merely illustrative and do not delimit the scope of the present disclosure. In the interest of clarity, not all features of an actual implementation may be described in the present disclosure. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present disclosure, the devices, members, apparatuses, and the like described herein may be positioned in any desired orientation. Thus, the use of terms such as "above," "below," "upper," "lower" or other like terms to describe a spatial relationship between various components or to describe the spatial orientation of aspects of such components should be understood to describe a relative relationship between the components or a spatial orientation of aspects of such components, respectively, as the device described herein may be oriented in any desired direction. As used herein, the term "coupled" may include direct or indirect coupling by any means, including moving and/or non-moving mechanical connections.

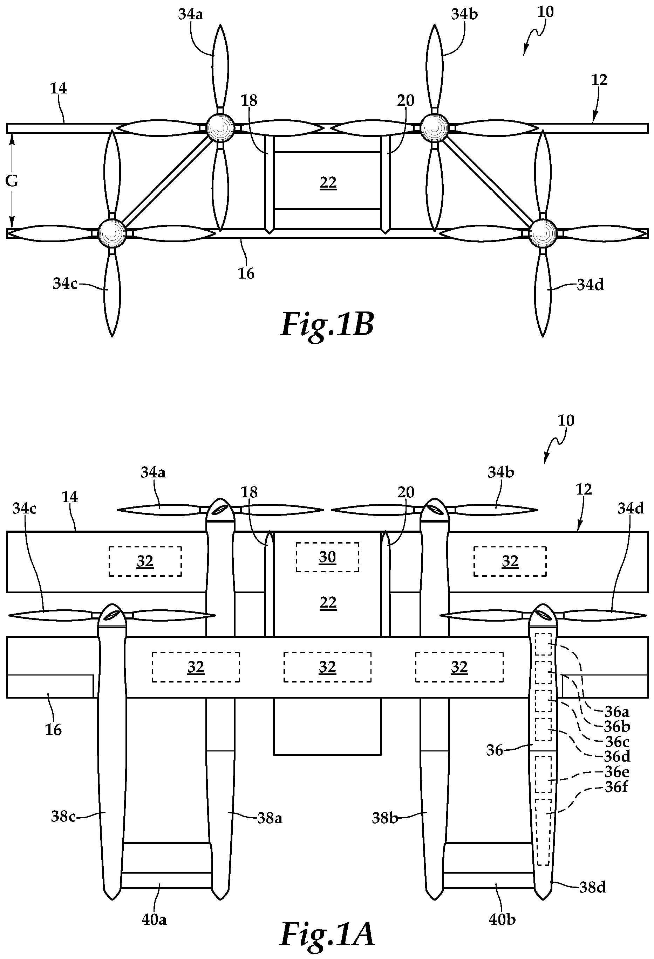

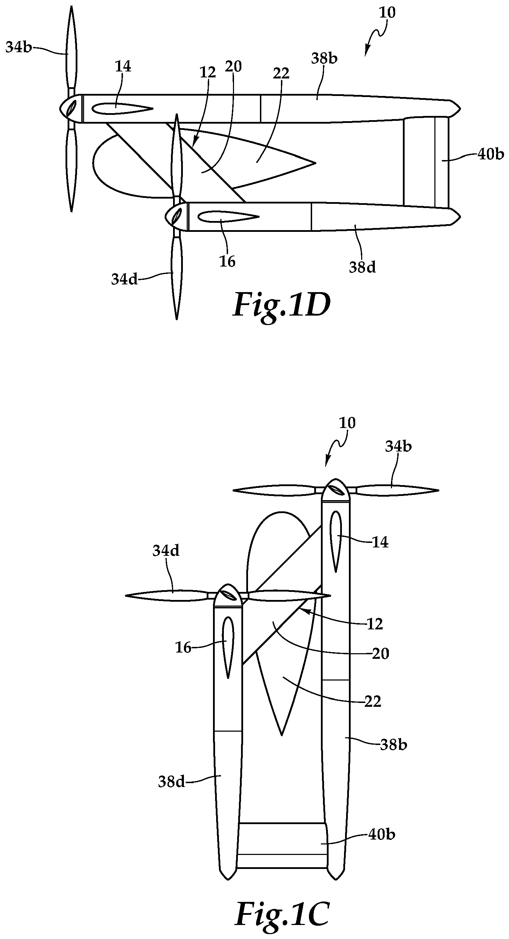

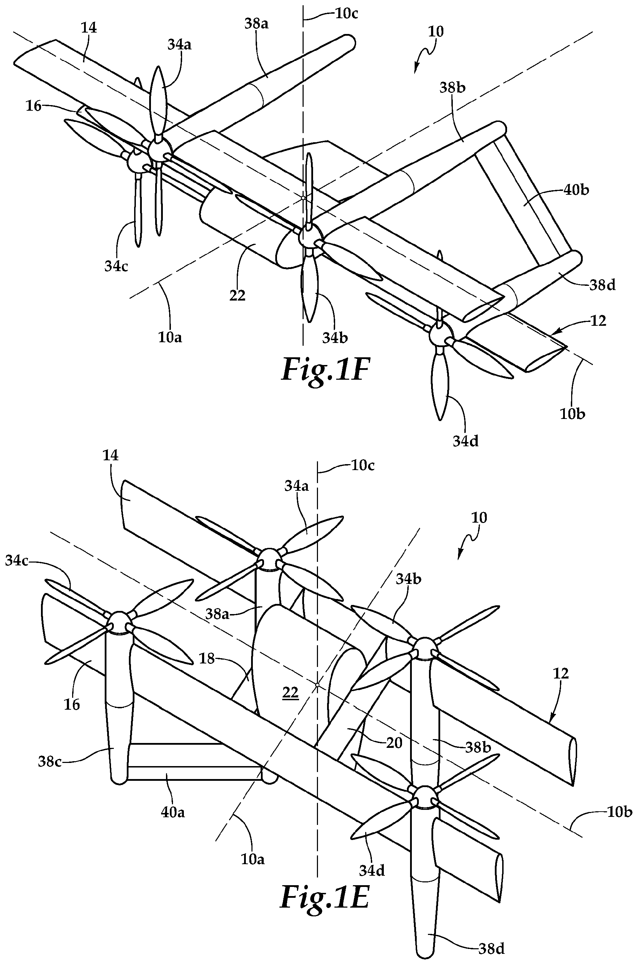

Referring to figures 1A-1F in the drawings, various views of an aircraft 10 having a staggerwing configuration that is operable to transition between thrust-borne lift in a VTOL orientation and wing-borne lift in a biplane orientation are depicted. Figures 1A, 1C, 1E depict aircraft 10 in the VTOL orientation wherein the propulsion assemblies provide thrust-borne lift. Figures 1B, 1D, 1F depict aircraft 10 in the biplane orientation for forward flight, wherein the propulsion assemblies provide forward thrust with the forward airspeed of aircraft 10 providing wing-borne lift enabling aircraft 10 to have a long-range or high-endurance flight mode. As best seen in figures 1E-1F, aircraft 10 has a longitudinal axis 10a that may also be referred to as the roll axis, a lateral axis 10b that may also be referred to as the pitch axis and a vertical axis 10c that may also be referred to as the yaw axis. When longitudinal axis 10a and lateral axis 10b are both in a horizontal plane and normal to the local vertical in the earth's reference frame, aircraft 10 has a level flight attitude.

In the illustrated embodiment, aircraft 10 has an airframe 12 including wings 14, 16 each having an airfoil cross-section that generates lift responsive to the forward airspeed of aircraft 10. Wings 14, 16 may be formed as single members or may be formed from multiple wing sections. The outer skins for wings 14, 16 are preferably formed from high strength and lightweight materials such as fiberglass, carbon, plastic, metal or other suitable material or combination of materials. As best seen in figure 1D, in the biplane orientation of aircraft 10, wing 14 is an upper wing and wing 16 is a lower wing. Also in the biplane orientation, wing 14 is forward of wing 16 such that airframe 12 has a staggerwing configuration which may be referred to as positive stagger as the upper wing is forward of the lower wing. Compared to conventional biplane aircraft with the upper and lower wings stacked one above the other, a biplane aircraft having wings with positive stagger has enhanced longitudinal stability, improved aerodynamic efficiency and increased maximum lift. As best seen in figure 1E, wings 14, 16 each have a straight wing configuration. In other embodiments, wings 14, 16 could have other designs such as anhedral and/or dihedral wing designs, swept wing designs or other suitable wing designs. In the illustrated embodiment, wings 14, 16 are substantially parallel with each other with no decalage angle. In the biplane orientation, the vertical distance between wings 14, 16 will be referred to as gap G, as best seen in figure 1B. Extending between wings 14, 16 are two bracing structures depicted as swept pylons 18, 20. In other embodiments, more than two pylons may be present. Pylons 18, 20 are preferably formed from high strength and lightweight materials such as fiberglass, carbon, plastic, metal or other suitable material or combination of materials. In the illustrated embodiment, pylons 18, 20 are substantially parallel with each other.

Aircraft 10 includes a pod assembly depicted as a cargo pod 22 that is coupled between pylons 18, 20. Cargo pod 22 may be fixed relative pylons 18, 20 or may be translatable and/or rotatable relative pylons 18, 20. In addition, cargo pod 22 may be a permanent component of airframe 12, may be removable while aircraft 10 is in a landed configuration or may be jettisonable during flight. Cargo pod 22 has an aerodynamic shape configured to minimize drag during high speed forward flight. Cargo pod 22 is preferably formed from high strength and lightweight materials such as fiberglass, carbon, plastic, metal or other suitable material or combination of materials. In other embodiments, the pod assembly may be a passenger pod assembly configured to transport passengers and/or crew including a pilot.

One or more of cargo pod 22, wings 14, 16 and/or pylons 18, 20 may contain flight control systems, energy sources, communication lines and other desired systems. For example, as best seen in figure 1A, cargo pod 22 houses the flight control system 30 of aircraft 10. Flight control system 30 is preferably a redundant digital flight control system including multiple independent flight control computers. For example, the use of a triply redundant flight control system 30 improves the overall safety and reliability of aircraft 10 in the event of a failure in flight control system 30. One or more of cargo pod 22, wings 14, 16 and/or pylons 18, 20 may contain one or more of electrical power sources depicted as a plurality of batteries 32 in wings 14, 16, as best seen in figure 1A. Batteries 32 supply electrical power to flight control system 30, the distributed thrust array of aircraft 10 and other power consumers of aircraft 10 such that aircraft 10 may be referred to as an electric vertical takeoff and landing (eVTOL) aircraft. In some embodiments, aircraft 10 may have a hybrid power system that includes one or more internal combustion engines and an electric generator. Preferably, the electric generator is used to charge batteries 32. In other embodiments, the electric generator may provide power directly to a power management system and/or the power consumers of aircraft 10. In still other embodiments, aircraft 10 may use fuel cells as the electrical power source.

Cargo pod 22, wings 14, 16 and/or pylons 18, 20 also contain a communication network that enables flight control system 30 to communicate with the distributed thrust array of aircraft 10. In the illustrated embodiment, aircraft 10 has a distributed thrust array that is coupled to airframe 12. As used herein, the term "distributed thrust array" refers to the use of multiple thrust generating elements each producing a portion of the total thrust output. The use of a "distributed thrust array" provides redundancy to the thrust generation capabilities of the aircraft including fault tolerance in the event of the loss of one of the thrust generating elements. A "distributed thrust array" can be used in conjunction with a "distributed power system" in which power to each of the thrust generating elements is supplied by a local power system instead of a centralized power source. For example, in a "distributed thrust array" having a plurality of propulsion assemblies acting as the thrust generating elements, a "distributed power system" may include individual battery elements housed within the nacelle of each propulsion assembly.

The distributed thrust array of aircraft 10 includes a plurality of propulsion assemblies, individually denoted as 34a, 34b, 34c, 34d and collectively referred to as propulsion assemblies 34. In the illustrated embodiment, propulsion assemblies 34a, 34b are coupled to wing 14 at inboard stations and propulsion assemblies 34c, 34d are coupled to wing 16 at outboard stations such that propulsion assemblies 34a, 34b are laterally offset relative to propulsion assemblies 34c, 34d. In addition, the rotors of propulsion assemblies 34a, 34b are longitudinally offset relative to the rotors of propulsion assemblies 34c, 34d. As illustrated, in the biplane orientation, the rotors of propulsion assemblies 34a, 34b are forward of wings 14, 16 while the rotors of propulsion assemblies 34c, 34d are aft of wing 14 and forward of wing 16. By longitudinally offsetting the forward rotors relative to the aft rotors, the potential for interference between the starboard rotors of propulsion assemblies 34a, 34c is eliminated and the potential for interference between the port rotors of propulsion assemblies 34b, 34d is eliminated. By eliminating this interference potential, the diameter of the rotors can be significantly increased compared to biplane aircraft with conventional stacked wings. For example, in a stacked wings design with four rotors that are longitudinally aligned in the same plane and laterally aligned, the radius of the rotors would typically be less than G/2 to eliminate the potential for rotor interference.

While certain lateral offset between rotors of the upper wing and the lower wing can be used to increase rotor radius without leading to rotor interference, this approach is limited by the length of the wings, among other factors. By longitudinally offsetting the forward rotors relative to the aft rotors such that the forward rotors and the aft rotors are operating in different planes with no possibility of interference, the radius of the rotors can be significantly increased including having rotors with a radius greater than G or other suitable radius. Using rotors with a larger radius increases the total rotor disk area of the thrust array which reduced the power required to generate a given amount of thrust. In other words, using a thrust array with a larger total rotor disk area allows for the generation of the same amount of thrust with less power compared to a thrust array with a smaller total rotor disk area. Likewise, using a thrust array with a larger total rotor disk area allows for the generation of more thrust with the same amount of power compared to a thrust array with a smaller total rotor disk area. For the present embodiments, a larger total rotor disk area allows for the optimization of VTOL or hover power due to reduced disk loading, noting that hover power is the highest power demand mode of aircraft 10. Depending upon the mission parameters, using a thrust array with a larger total rotor disk area provides for increased payload capacity, increased range and/or increased efficiency due to the weight reduction of downsized engines/motors or carrying fewer batteries. In the illustrated embodiment, rotor efficiency is further enhanced by laterally offsetting the forward rotors of propulsion assemblies 34a, 34b relative to the aft rotors of propulsion assemblies 34c, 34d which minimizes the rotor wash from propulsion assemblies 34a, 34b that is ingested by propulsion assemblies 34c, 34d.

Even though the illustrated embodiment depicts four propulsion assemblies 34, the distributed thrust array of aircraft 10 could have other numbers of propulsion assemblies both greater than or less than four. Also, even though the illustrated embodiment depicts propulsion assemblies 34 in a mid-wing configuration, the distributed thrust array of aircraft 10 could have propulsion assemblies coupled to the wings in a low wing configuration, a high wing configuration or any combination or permutation thereof. Propulsion assemblies 34 may be variable speed propulsion assemblies having fixed pitch rotor blades and thrust vectoring capability. Depending upon the implementation, propulsion assemblies 34 may have longitudinal thrust vectoring capability, lateral thrust vectoring capability or omnidirectional thrust vectoring capability. In other embodiments, propulsion assemblies 34 may be single speed propulsion assemblies, may have variable pitch rotor blades and/or may be non-thrust vectoring propulsion assemblies.

Referring to figure 1A, component parts of propulsion assembly 34d will now be described. It is noted that propulsion assembly 34d is representative of each propulsion assembly 34 therefore, for sake of efficiency, certain features have been disclosed only with reference to propulsion assembly 34d. One having ordinary skill in the art, however, will fully appreciate an understanding of each propulsion assembly 34 based upon the disclosure herein of propulsion assembly 34d. In the illustrated embodiment, propulsion assembly 34d includes a nacelle 36 that houses components including a variable speed electric motor 36a, a speed controller 36b, one or more actuators 36c, an electronics node 36d, one or more sensors 36e, one or more batteries 36f and other desired electronic equipment. In the illustrated embodiment, each propulsion assembly 34 includes a tailboom respectively denotes as tailbooms 38a, 38b, 38c, 38d. Extending between tailbooms 38a, 38c is a tail surface depicted as ruddervator 40a. Likewise, extending between tailbooms 38b, 38d is a tail surface depicted as ruddervator 40b. In the illustrated embodiment, ruddervators 40a, 40b provide horizontal and vertical stabilization and have active aerosurfaces that serve as rudders to control yaw and elevators to control the pitch. Ruddervators 40a, 40b may also serve to enhance hover stability in the VTOL orientation of aircraft 10.

Flight control system 30 communicates via a fly-by-wire communications network within airframe 12 with electronics nodes 36d of propulsion assemblies 34. Flight control system 30 receives data from sensors 36e and sends flight command information to the electronics nodes 36d such that each propulsion assembly 34 may be individually and independently controlled and operated. For example, flight control system 30 is operable to individually and independently control the speed and the thrust vector of each propulsion assembly 34. Flight control system 30 may autonomously control some or all aspects of flight operation for aircraft 10. Flight control system 30 is also operable to communicate with remote systems, such as a ground station via a wireless communications protocol. The remote system may be operable to receive flight data from and provide commands to flight control system 30 to enable remote flight control over some or all aspects of flight operation for aircraft 10.

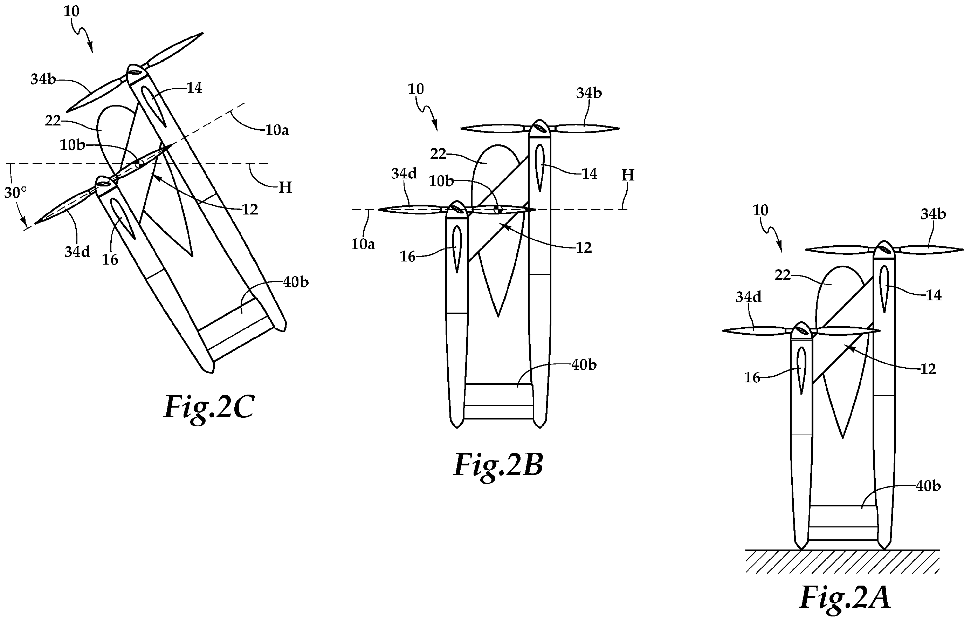

Referring additionally to figures 2A-2I in the drawings, a sequential flight-operating scenario of aircraft 10 is depicted. As best seen in figure 2A, aircraft 10 is in a tailsitter position on a surface such as the ground or the deck of an aircraft carrier. When aircraft 10 is ready for a mission, flight control system 30 commences operations providing flight commands to the various components of aircraft 10. Flight control system 30 may be operated responsive to autonomous flight control, remote flight control or a combination thereof. For example, it may be desirable to utilize remote flight control during certain maneuvers such as takeoff and landing but rely on autonomous flight control during hover, high speed forward flight and transitions between wing-borne flight and thrust-borne flight.

As best seen in figure 2B, aircraft 10 has performed a vertical takeoff and is engaged in thrust-borne lift in the VTOL orientation of aircraft 10. As longitudinal axis 10a and lateral axis 10b (denoted as the target) are both in a horizontal plane H that is normal to the local vertical in the earth's reference frame, aircraft 10 has a level flight attitude. In the VTOL orientation, wing 16 is the forward wing and wing 14 is the aft wing. As discussed herein, flight control system 30 independently controls and operates each propulsion assembly 34 including independently controlling speed and thrust vector. During hover, flight control system 30 may utilize differential speed control and/or differential or collective thrust vectoring of propulsion assemblies 34 to provide hover stability for aircraft 10 and to provide pitch, roll, yaw and translation authority for aircraft 10.

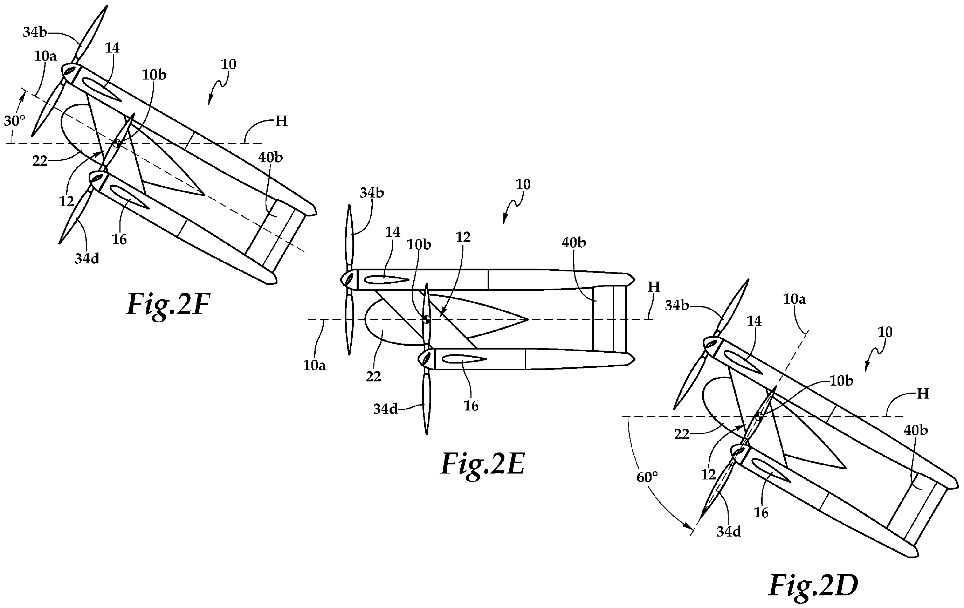

After vertical ascent to the desired elevation, aircraft 10 may begin the transition from thrust-borne lift to wing-borne lift. As best seen from the progression of figures 2B-2E, aircraft 10 is operable to pitch down from the VTOL orientation toward the biplane orientation to enable high speed and/or long range forward flight. As seen in figure 2C, longitudinal axis 10a extends out of the horizontal plane H such that aircraft 10 has an inclined flight attitude of about thirty degrees pitch down. As seen in figure 2D, longitudinal axis 10a extends out of the horizontal plane H such that aircraft 10 has an inclined flight attitude of about sixty degrees pitch down. Flight control system 30 may achieve this operation through speed control of some or all of propulsion assemblies 34, thrust vectoring of some or all of propulsion assemblies 34 or any combination thereof.

As best seen in figure 2E, aircraft 10 has completed the transition to the biplane orientation. In the biplane orientation, wing 14 is the upper wing positioned above and forward of wing 16, which is the lower wing. By convention, longitudinal axis 10a has been reset to be in the horizontal plane H, which also includes lateral axis 10b, such that aircraft 10 has a level flight attitude in the biplane orientation. As forward flight with wing-borne lift requires significantly less power than VTOL flight with thrust-borne lift, the operating speed of some or all of the propulsion assemblies 34 may be reduced. In certain embodiments, some of the propulsion assemblies of aircraft 10 could be shut down during forward flight. In the biplane orientation, the independent control provided by flight control system 30 over each propulsion assembly 34 as well as controlling the positions of the active aerosurfaces of ruddervators 40a, 40b provides pitch, roll and yaw authority for aircraft 10.

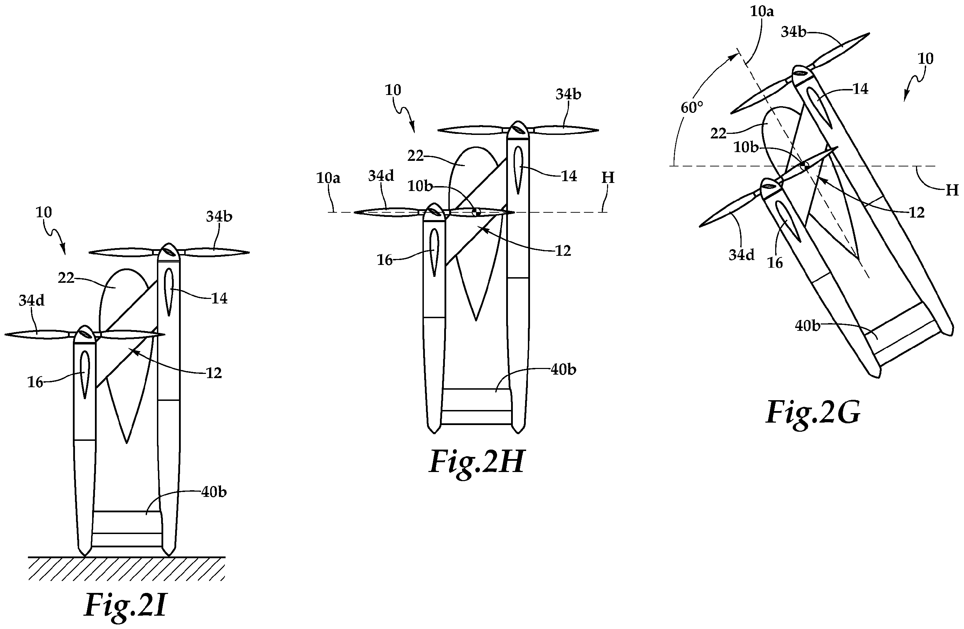

As aircraft 10 approaches the desired location, aircraft 10 may begin its transition from wing-borne lift to thrust-borne lift. As best seen from the progression of figures 2E-2H, aircraft 10 is operable to pitch up from the biplane orientation to the VTOL orientation to enable, for example, a vertical landing operation. As seen in figure 2F, longitudinal axis 10a extends out of the horizontal plane H such that aircraft 10 has an inclined flight attitude of about thirty degrees pitch up. As seen in figure 2G, longitudinal axis 10a extends out of the horizontal plane H such that aircraft 10 has an inclined flight attitude of about sixty degrees pitch up. Flight control system 30 may achieve this operation through speed control of some or all of propulsion assemblies 34, thrust vectoring of some or all of propulsion assemblies 34 or any combination thereof. In figure 2H, aircraft 10 has completed the transition from the biplane orientation to the VTOL orientation and, by convention, longitudinal axis 10a has been reset to be in the horizontal plane H which also includes lateral axis 10b such that aircraft 10 has a level flight attitude in the VTOL orientation. Once aircraft 10 has completed the transition to the VTOL orientation, aircraft 10 may commence its vertical descent to a surface. As best seen in figure 2I, aircraft 10 has landed in a tailsitter orientation at the desired location.

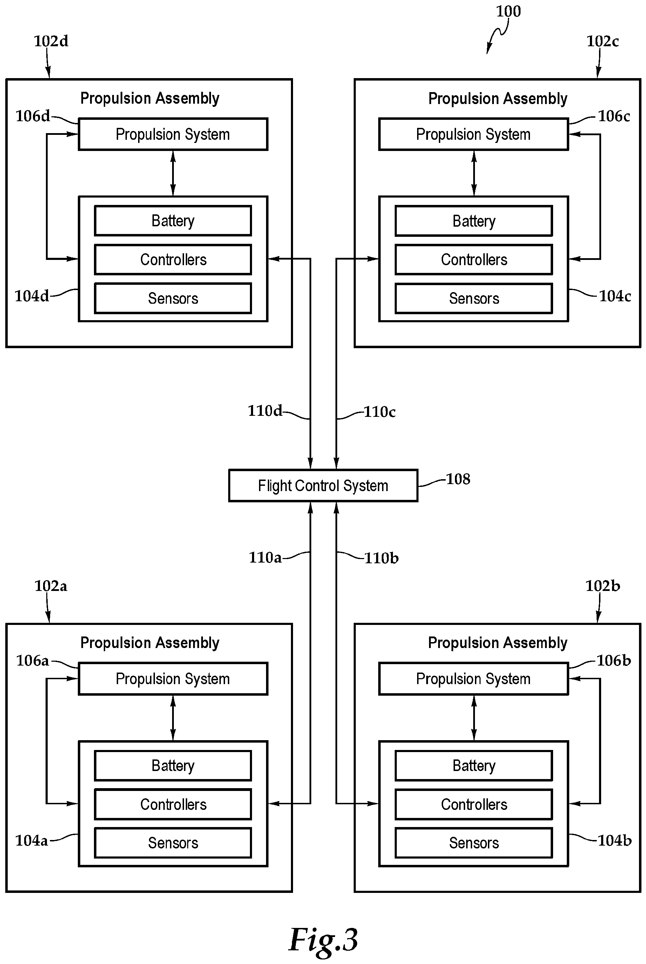

Referring next to figure 3, a block diagram illustrates various systems of an aircraft 100 that is representative of aircraft 10 discussed herein. Specifically, aircraft 100 includes four propulsion assemblies 102a, 102b, 102c, 102d that form a thrust array with rotors having lateral and longitudinal offset. Propulsion assembly 102a includes an electronics node 104a depicted as including controllers, sensors and one or more batteries. Propulsion assembly 102a also includes a propulsion system 106a that includes an electric motor and a rotor. Propulsion assembly 102b includes an electronics node 104b depicted as including controllers, sensors and one or more batteries. Propulsion assembly 102b also includes a propulsion system 106b that includes an electric motor and a rotor. Propulsion assembly 102c includes an electronics node 104c depicted as including controllers, sensors and one or more batteries. Propulsion assembly 102c also includes a propulsion system 106c that includes an electric motor and a rotor. Propulsion assembly 102d includes an electronics node 104d depicted as including controllers, sensors and one or more batteries. Propulsion assembly 102d also includes a propulsion system 106d that includes an electric motor and a rotor. A flight control system 108 is operably associated with each of propulsion assemblies 102a, 102b, 102c, 102d and is communicably linked to the electronic nodes 104a, 104b, 104c, 104d thereof by a fly-by-wire communications network depicted as arrows 110a, 110b, 1 10c, 1 10d between flight control system 108 and propulsion assemblies 102a, 102b, 102c, 102d. Flight control system 108 receives sensor data from and sends commands to propulsion assemblies 102a, 102b, 102c, 102d to enable flight control system 108 to independently control each of propulsion assemblies 102a, 102b, 102c, 102d as discussed herein.

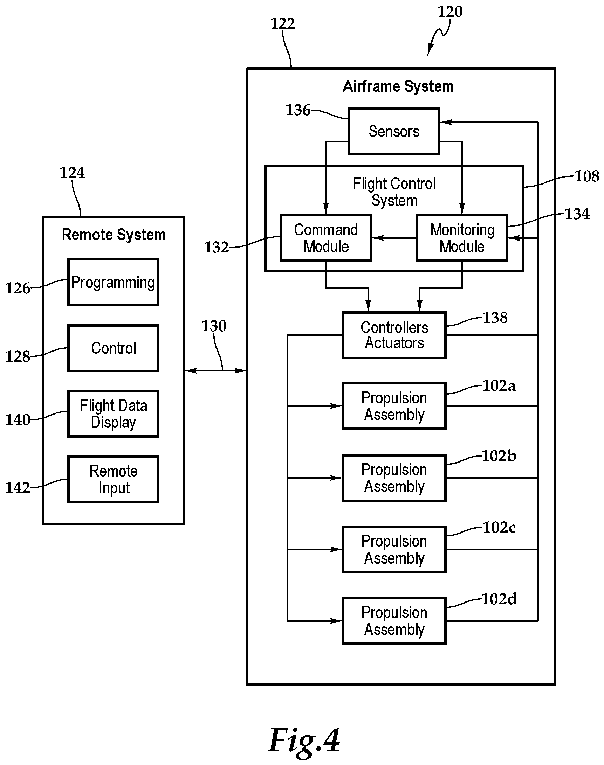

Referring additionally to figure 4 in the drawings, a block diagram depicts a control system 120 operable for use with aircraft 100 or aircraft 10 of the present disclosure. In the illustrated embodiment, system 120 includes two primary computer based subsystems; namely, an airframe system 122 and a remote system 124. In some implementations, remote system 124 includes a programming application 126 and a remote control application 128. Programming application 126 enables a user to provide a flight plan and mission information to aircraft 100 such that flight control system 108 may engage in autonomous control over aircraft 100. For example, programming application 126 may communicate with flight control system 108 over a wired or wireless communication channel 130 to provide a flight plan including, for example, a starting point, a trail of waypoints and an ending point such that flight control system 108 may use waypoint navigation during the mission. In addition, programming application 126 may provide one or more tasks to flight control system 108 for aircraft 100 to accomplish during the mission. Following programming, aircraft 100 may operate autonomously responsive to commands generated by flight control system 108.

Flight control system 108 preferably includes a non-transitory computer readable storage medium including a set of computer instructions executable by a processor. Flight control system 108 may be a triply redundant system implemented on one or more general-purpose computers, special purpose computers or other machines with memory and processing capability. For example, flight control system 108 may include one or more memory storage modules including, but is not limited to, internal storage memory such as random access memory, non-volatile memory such as read only memory, removable memory such as magnetic storage memory, optical storage, solid-state storage memory or other suitable memory storage entity. Flight control system 108 may be a microprocessor-based system operable to execute program code in the form of machine-executable instructions. In addition, flight control system 108 may be selectively connectable to other computer systems via a proprietary encrypted network, a public encrypted network, the Internet or other suitable communication network that may include both wired and wireless connections.

In the illustrated embodiment, flight control system 108 includes a command module 132 and a monitoring module 134. It is to be understood by those skilled in the art that these and other modules executed by flight control system 108 may be implemented in a variety of forms including hardware, software, firmware, special purpose processors and combinations thereof. Flight control system 108 receives input from a variety of sources including internal sources such as sensors 136, controllers/actuators 138, propulsion assemblies 102a, 102b, 102c, 102d and external sources such as remote system 124 as well as global positioning system satellites or other location positioning systems and the like. For example, as discussed herein, flight control system 108 may receive a flight plan for a mission from remote system 124. Thereafter, flight control system 108 may be operable to autonomously control all aspects of flight of an aircraft of the present disclosure.

For example, during the various operating modes of aircraft 100 including VTOL operations, forward flight operations and conversion operations, command module 132 provides commands to controllers/actuators 138. These commands enable independent operation of propulsion assemblies 102a, 102b, 102c, 102d. Flight control system 108 receives feedback from controllers/actuators 138 and propulsion assemblies 102a, 102b, 102c, 102d. This feedback is processed by monitoring module 134 that can supply correction data and other information to command module 132 and/or controllers/actuators 138. Sensors 136, such as positioning sensors, attitude sensors, speed sensors, environmental sensors, fuel sensors, temperature sensors, location sensors and the like also provide information to flight control system 108 to further enhance autonomous control capabilities.

Some or all of the autonomous control capability of flight control system 108 can be augmented or supplanted by remote flight control from, for example, remote system 124. Remote system 124 may include one or computing systems that may be implemented on general-purpose computers, special purpose computers or other machines with memory and processing capability. For example, the computing systems may include one or more memory storage modules including, but is not limited to, internal storage memory such as random access memory, non-volatile memory such as read only memory, removable memory such as magnetic storage memory, optical storage memory, solid-state storage memory or other suitable memory storage entity. The computing systems may be microprocessor-based systems operable to execute program code in the form of machine-executable instructions. In addition, the computing systems may be connected to other computer systems via a proprietary encrypted network, a public encrypted network, the Internet or other suitable communication network that may include both wired and wireless connections. The communication network may be a local area network, a wide area network, the Internet, or any other type of network that couples a plurality of computers to enable various modes of communication via network messages using suitable communication techniques, such as transmission control protocol/internet protocol, file transfer protocol, hypertext transfer protocol, internet protocol security protocol, point-to-point tunneling protocol, secure sockets layer protocol or other suitable protocol. Remote system 124 communicates with flight control system 108 via a communication link 130 that may include both wired and wireless connections.

While operating remote control application 128, remote system 124 is configured to display information relating to one or more aircraft of the present disclosure on one or more flight data display devices 140. Display devices 140 may be configured in any suitable form, including, for example, liquid crystal displays, light emitting diode displays or any suitable type of display. Remote system 124 may also include audio output and input devices such as a microphone, speakers and/or an audio port allowing an operator to communicate with other operators or a base station. The display device 140 may also serve as a remote input device 142 if a touch screen display implementation is used, however, other remote input devices, such as a keyboard or joystick, may alternatively be used to allow an operator to provide control commands to an aircraft being operated responsive to remote control.

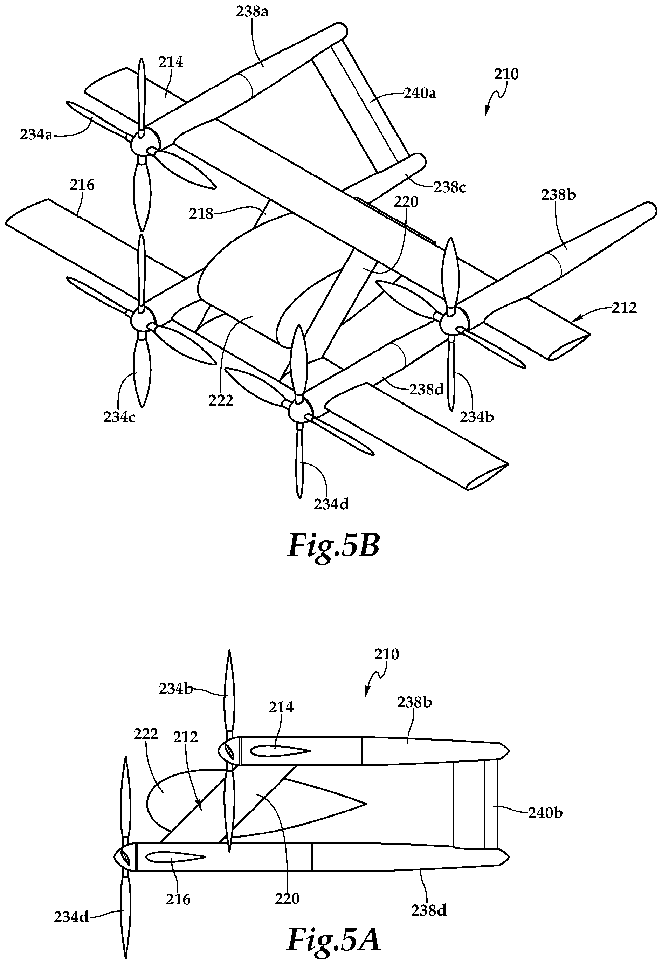

Referring next to figures 5A-5B in the drawings, various views of an aircraft 210 having a staggerwing configuration that is operable to transition between thrust-borne lift in a VTOL orientation and wing-borne lift in a biplane orientation are depicted. In the illustrated embodiment, aircraft 210 has an airframe 212 including wings 214, 216. In the biplane orientation of aircraft 210, wing 214 is an upper wing and wing 216 is a lower wing. Also in the biplane orientation, wing 214 is aft of wing 216 such that airframe 212 has a staggerwing configuration which may be referred to as negative stagger as the upper wing is aft of the lower wing. Extending between wings 214, 216 are two bracing structures depicted as swept pylons 218, 220 that are substantially parallel with each other. Aircraft 210 includes a pod assembly depicted as a cargo pod 222 that is coupled between pylons 218, 220. One or more of cargo pod 222, wings 214, 216 and/or pylons 218, 220 may contain flight control systems, energy sources, communication lines and other desired systems.

A distributed thrust array of aircraft 210 includes a plurality of propulsion assemblies, individually denoted as 234a, 234b, 234c, 234d and collectively referred to as propulsion assemblies 234. In the illustrated embodiment, propulsion assemblies 234a, 234b are coupled to wing 214 at outboard stations and propulsion assemblies 234c, 234d are coupled to wing 216 at inboard stations such that propulsion assemblies 234a, 234b are laterally offset relative to propulsion assemblies 234c, 234d. In addition, the rotors of propulsion assemblies 234a, 234b are longitudinally offset relative to the rotors of propulsion assemblies 234c, 234d. In the biplane orientation, the rotors of propulsion assemblies 234c, 234d are forward of wings 214, 216 while the rotors of propulsion assemblies 234a, 234b are aft of wing 214 and forward of wing 216. By longitudinally offsetting the forward rotors relative to the aft rotors such that the forward rotors and the aft rotors are operating in different planes, the radius of the rotors can be significantly increased including having rotors with a radius greater than G or other suitable radius, thereby increasing the total rotor disk area and enabling optimization of VTOL or hover power due to reduced disk loading. In the illustrated embodiment, rotor efficiency is further enhanced by laterally offsetting forward propulsion assemblies 234c, 234d relative to aft propulsion assemblies 234a, 234b which minimizes the rotor wash from forward propulsion assemblies 234c, 234d that is ingested by aft propulsion assemblies 234a, 234b .

In the illustrated embodiment, each propulsion assembly 234 includes a tailboom respectively denotes as tailbooms 238a, 238b, 238c, 238d. Extending between tailbooms 238a, 238c is a tail surface depicted as ruddervator 240a. Likewise, extending between tailbooms 238b, 238d is a tail surface depicted as ruddervator 240b. In the illustrated embodiment, ruddervators 240a, 240b provide horizontal and vertical stabilization and have active aerosurfaces that serve as rudders to control yaw and elevators to control the pitch. Ruddervators 240a, 240b may also serve to enhance hover stability in the VTOL orientation of aircraft 210.

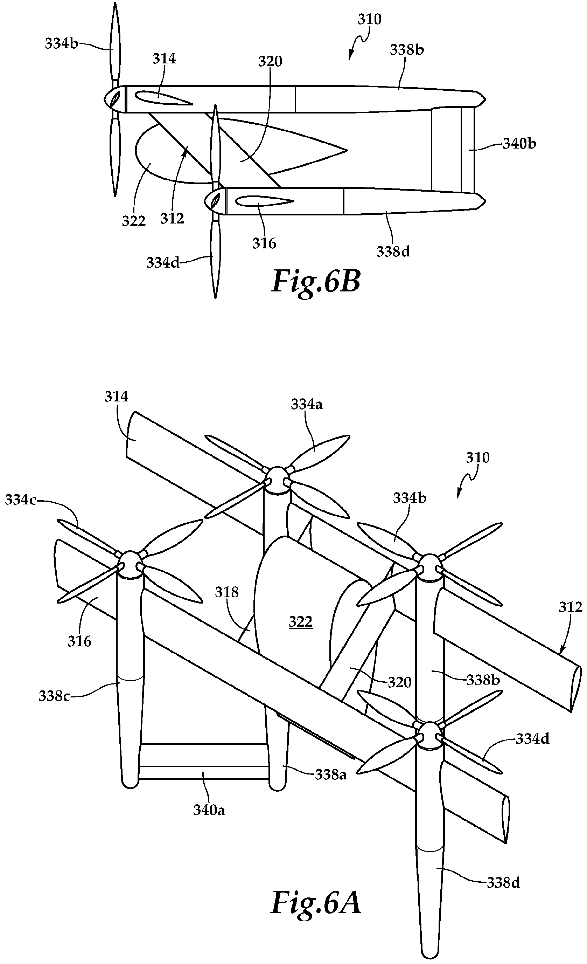

Referring next to figures 6A-6B in the drawings, various views of an aircraft 310 having a staggerwing configuration that is operable to transition between thrust-borne lift in a VTOL orientation and wing-borne lift in a biplane orientation are depicted. In the illustrated embodiment, aircraft 310 has an airframe 312 including wings 314, 316. In the biplane orientation of aircraft 310, wing 314 is an upper wing and wing 316 is a lower wing. Also in the biplane orientation, wing 314 is forward of wing 316 such that airframe 312 has a staggerwing configuration. In the illustrated embodiment, wing 314 has a decalage angle relative to wing 316 which may be referred to as a positive decalage angle as the upper wing has a higher angle of incidence than the lower wing, which results in the upper wing generating greater lift than the lower wing and in the forward wing stalling prior to the aft wing as wing 314 will exceeds its critical angle of attack prior to wing 316. In other embodiments, such as in aircraft 210, a negative decalage angle would be preferred wherein the lower wing has a higher angle of incidence than the upper wing, which results in the lower wing generating greater lift than the upper wing while preserving the ability of the forward wing to stall prior to the aft wing. Extending between wings 314, 316 are two bracing structures depicted as swept pylons 318, 320 that are substantially parallel with each other. Aircraft 310 includes a pod assembly depicted as a cargo pod 322 that is coupled between pylons 318, 320. One or more of cargo pod 322, wings 314, 316 and/or pylons 318, 320 may contain flight control systems, energy sources, communication lines and other desired systems.

A distributed thrust array of aircraft 310 includes a plurality of propulsion assemblies, individually denoted as 334a, 334b, 334c, 334d and collectively referred to as propulsion assemblies 334. In the illustrated embodiment, propulsion assemblies 334a, 334b are coupled to wing 314 at inboard stations and propulsion assemblies 334c, 334d are coupled to wing 316 at outboard stations such that propulsion assemblies 334a, 334b are laterally offset relative to propulsion assemblies 334c, 334d. In addition, the rotors of propulsion assemblies 334a, 334b are longitudinally offset relative to the rotors of propulsion assemblies 334c, 334d such that the rotors of propulsion assemblies 334a, 334b operate in a different plane than the rotors of propulsion assemblies 334c, 334d. In the illustrated embodiment, each propulsion assembly 334 includes a tailboom respectively denotes as tailbooms 338a, 338b, 338c, 338d. Extending between tailbooms 338a, 338c is a tail surface depicted as ruddervator 340a. Likewise, extending between tailbooms 338b, 338d is a tail surface depicted as ruddervator 340b.

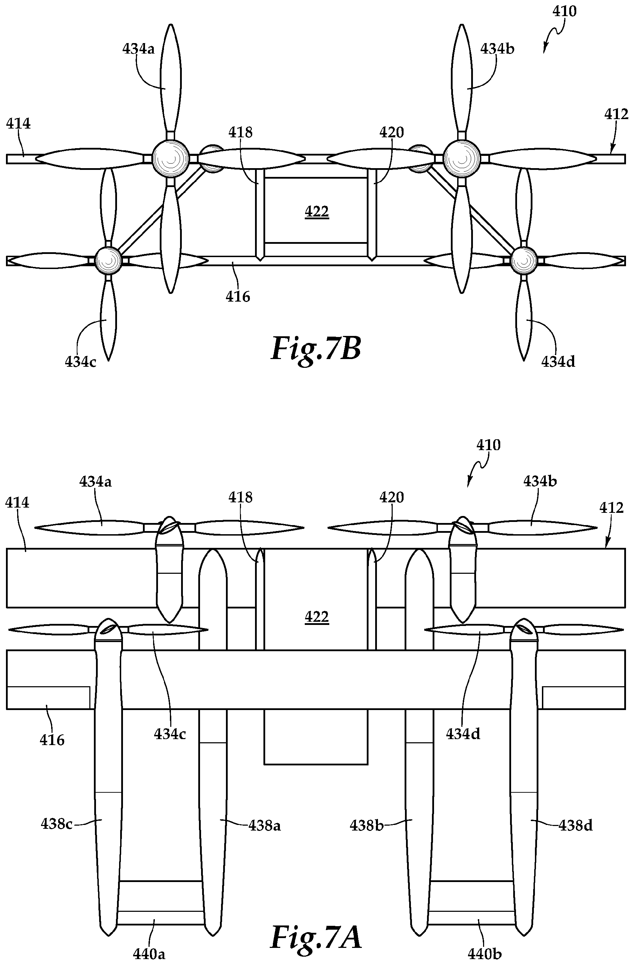

Referring next to figures 7A-7B in the drawings, various views of an aircraft 410 having a staggerwing configuration that is operable to transition between thrust-borne lift in a VTOL orientation and wing-borne lift in a biplane orientation are depicted. In the illustrated embodiment, aircraft 410 has an airframe 412 including wings 414, 416. In the biplane orientation of aircraft 410, wing 414 is an upper wing and wing 416 is a lower wing. Also in the biplane orientation, wing 414 is forward of wing 416 such that airframe 412 has a staggerwing configuration. Extending between wings 414, 416 are two bracing structures depicted as swept pylons 418, 420 that are substantially parallel with each other. Aircraft 410 includes a pod assembly depicted as a cargo pod 422 that is coupled between pylons 418, 420. One or more of cargo pod 422, wings 414, 416 and/or pylons 418, 420 may contain flight control systems, energy sources, communication lines and other desired systems.

A distributed thrust array of aircraft 410 includes a plurality of propulsion assemblies, individually denoted as 434a, 434b, 434c, 434d and collectively referred to as propulsion assemblies 434. In the illustrated embodiment, propulsion assemblies 434a, 434b are coupled to wing 414 at inboard stations and propulsion assemblies 434c, 434d are coupled to wing 416 at outboard stations such that propulsion assemblies 434a, 434b are laterally offset relative to propulsion assemblies 434c, 434d. In addition, the rotors of propulsion assemblies 434a, 434b are longitudinally offset relative to the rotors of propulsion assemblies 434c, 434d such that the rotors of propulsion assemblies 434a, 434b operate in a different plane than the rotors of propulsion assemblies 434c, 434d. In the illustrated embodiment, the radius of the rotors of propulsion assemblies 434a, 434b is larger than the radius of the rotors of propulsion assemblies 434c, 434d with the radius of the rotors of propulsion assemblies 434a, 434b being significantly greater than G. Each of propulsion assemblies 434c, 434d includes a tailboom respectively denotes as tailbooms 438c, 438d. In addition, tailbooms 438a, 438b extend aftwardly from wing 414. Extending between tailbooms 438a, 438c is a tail surface depicted as ruddervator 440a. Likewise, extending between tailbooms 438b, 438d is a tail surface depicted as ruddervator 440b.

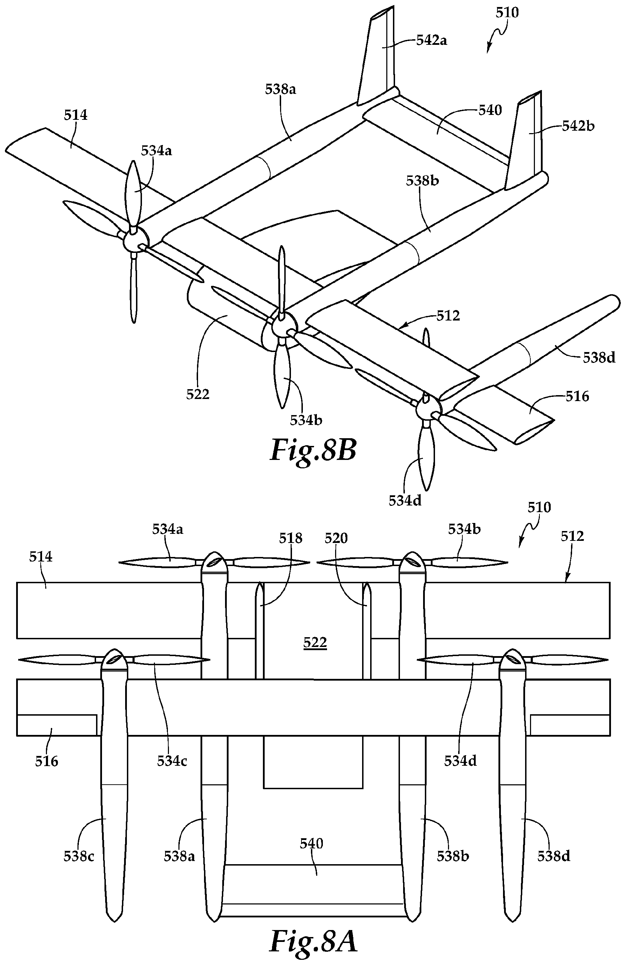

Referring next to figures 8A-8B in the drawings, various views of an aircraft 510 having a staggerwing configuration that is operable to transition between thrust-borne lift in a VTOL orientation and wing-borne lift in a biplane orientation are depicted, according to an example not forming part of the presently claimed invention. In the illustrated example, aircraft 510 has an airframe 512 including wings 514, 516. In the biplane orientation of aircraft 510, wing 514 is an upper wing and wing 516 is a lower wing. Also in the biplane orientation, wing 514 is forward of wing 516 such that airframe 512 has a staggerwing configuration. Extending between wings 514, 516 are two bracing structures depicted as swept pylons 518, 520 that are substantially parallel with each other. Aircraft 510 includes a pod assembly depicted as a cargo pod 522 that is coupled between pylons 518, 520. One or more of cargo pod 522, wings 514, 516 and/or pylons 518, 520 may contain flight control systems, energy sources, communication lines and other desired systems.

A distributed thrust array of aircraft 510 includes a plurality of propulsion assemblies, individually denoted as 534a, 534b, 534c, 534d and collectively referred to as propulsion assemblies 534. In the illustrated example, propulsion assemblies 534a, 534b are coupled to wing 514 at inboard stations and propulsion assemblies 534c, 534d are coupled to wing 516 at outboard stations such that propulsion assemblies 534a, 534b are laterally offset relative to propulsion assemblies 534c, 534d. In addition, the rotors of propulsion assemblies 534a, 534b are longitudinally offset relative to the rotors of propulsion assemblies 534c, 534d such that the rotors of propulsion assemblies 534a, 534b operate in a different plane than the rotors of propulsion assemblies 534c, 534d. Each of propulsion assemblies 534 includes a tailboom respectively denotes as tailbooms 538a, 538b, 538c, 538d. Extending between tailbooms 438a, 438b is a tail surface depicted as elevator 540. In addition, each of tailbooms 438a, 438b has a vertical stabilizer extending therefrom depicted as rudders 542a, 542b.

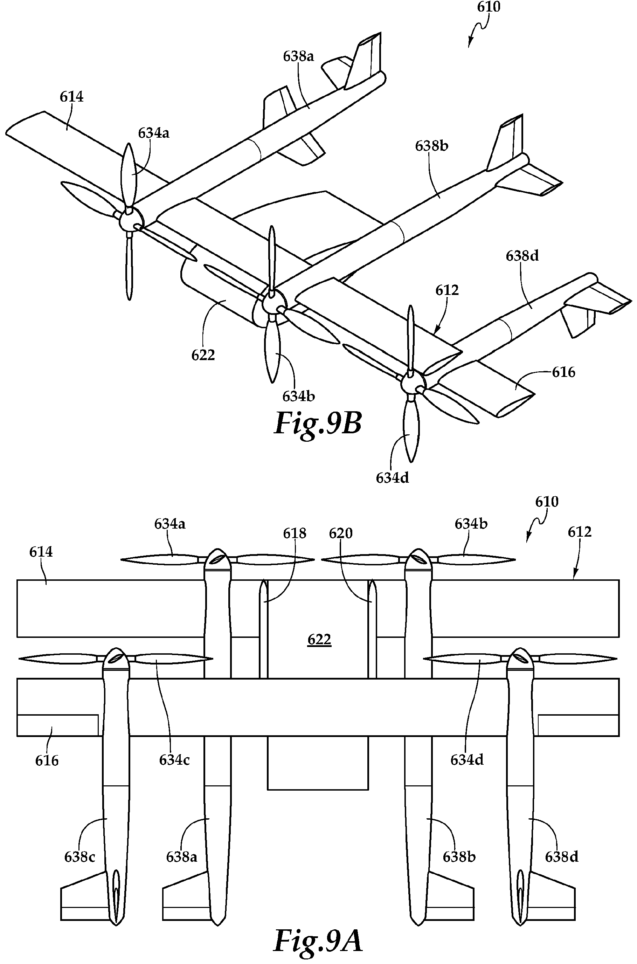

Referring next to figures 9A-9B in the drawings, various views of an aircraft 610 having a staggerwing configuration that is operable to transition between thrust-borne lift in a VTOL orientation and wing-borne lift in a biplane orientation are depicted, according to an example not forming part of the presently claimed invention. In the illustrated example, aircraft 610 has an airframe 612 including wings 614, 616. In the biplane orientation of aircraft 610, wing 614 is an upper wing and wing 616 is a lower wing. Also in the biplane orientation, wing 614 is forward of wing 616 such that airframe 612 has a staggerwing configuration. Extending between wings 614, 616 are two bracing structures depicted as swept pylons 618, 620 that are substantially parallel with each other. Aircraft 610 includes a pod assembly depicted as a cargo pod 622 that is coupled between pylons 618, 620. One or more of cargo pod 622, wings 614, 616 and/or pylons 618, 620 may contain flight control systems, energy sources, communication lines and other desired systems.

A distributed thrust array of aircraft 610 includes a plurality of propulsion assemblies, individually denoted as 634a, 634b, 634c, 634d and collectively referred to as propulsion assemblies 634. In the illustrated example, propulsion assemblies 634a, 634b are coupled to wing 614 at inboard stations and propulsion assemblies 634c, 634d are coupled to wing 616 at outboard stations such that propulsion assemblies 634a, 634b are laterally offset relative to propulsion assemblies 634c, 634d. In addition, the rotors of propulsion assemblies 634a, 634b are longitudinally offset relative to the rotors of propulsion assemblies 634c, 634d such that the rotors of propulsion assemblies 634a, 634b operate in a different plane than the rotors of propulsion assemblies 634c, 634d. Each of propulsion assemblies 634 includes a tailboom respectively denotes as tailbooms 638a, 638b, 638c, 63 8d. Each tailboom has a tail surface depicted as a horizontal stabilizer and a vertical stabilizer.

The foregoing description of embodiments of the disclosure has been presented for purposes of illustration and description. It is not intended to be exhaustive or to limit the disclosure to the precise form disclosed, and modifications and variations are possible in light of the above teachings or may be acquired from practice of the disclosure. The embodiments were chosen and described in order to explain the principals of the disclosure and its practical application to enable one skilled in the art to utilize the disclosure in various embodiments and with various modifications as are suited to the particular use contemplated. Other substitutions, modifications, changes and omissions may be made in the design, operating conditions and arrangement of the embodiments, as far as they fall within the scope of the appended claims. Such modifications and combinations of the illustrative embodiments as well as other embodiments will be apparent to persons skilled in the art upon reference to the description.

## Claims

1. An aircraft (10; 210; 310; 410; 510; 610) operable to transition between thrust-borne lift in a VTOL orientation and wing-borne lift in a biplane orientation, the aircraft (10; 210; 310; 410; 510; 610) comprising:
an airframe (12; 212; 312; 412; 512; 612) having first (14; 214; 314; 414; 514; 614) and second (16; 216; 316; 416; 516; 616) wings in a staggerwing configuration with first (18; 218; 318; 418; 518; 618) and second (20; 220; 320; 420; 520; 620) swept pylons extending therebetween;
a distributed thrust array attached to the airframe, the thrust array including a first plurality of propulsion assemblies (34a, 34b; 234a, 234b; 334a, 334b; 434a, 434b; 534a, 534b; 634a, 634b) coupled to the first wing (14; 214; 314; 414; 514; 614) and a second plurality of propulsion assemblies (34c, 34d; 234c, 234d; 334c, 334d; 434c, 434d; 534c, 534d; 634c, 634d) coupled to the second wing (16; 216; 316; 416; 516; 616), each of the propulsion assemblies (34a-d; 234a-d; 334a-d; 434a-d; 534a-d; 634a-d) including a tailboom (38a-d; 238a-d; 338a-d; 438a-d; 538a-d; 638a-d);
a plurality of tail surfaces (40a, 40b; 240a, 240b; 340a, 340b; 440a, 440b; 540) each extending between the tailbooms (38a-d; 238a-d; 338a-d; 438a-d; 538a-d; 638a-d) of one of the propulsion assemblies of the first plurality of propulsion assemblies (34a, 34b; 234a, 234b; 334a, 334b; 434a, 434b; 534a, 534b; 634a, 634b) and one of the propulsion assemblies of the second plurality of propulsion assemblies (34c, 34d; 234c, 234d; 334c, 334d; 434c, 434d; 534c, 534d; 634c, 634d); and
a flight control system (30) coupled to the airframe (12; 212; 312; 412; 512; 612), the flight control system (30) configured to independently control each of the propulsion assemblies (34a-d; 234a-d; 334a-d; 434a-d; 534a-d; 634a-d);
wherein, the first plurality of propulsion assemblies (34a, 34b; 234a, 234b; 334a, 334b; 434a, 434b; 534a, 534b; 634a, 634b) is longitudinally offset relative to the second plurality of propulsion assemblies (34c, 34d; 234c, 234d; 334c, 334d; 434c, 434d; 534c, 534d; 634c, 634d) such that rotors of the first plurality of propulsion assemblies (34a, 34b; 234a, 234b; 334a, 334b; 434a, 434b; 534a, 534b; 634a, 634b) rotate in a different plane than rotors of the second plurality of propulsion assemblies (34c, 34d; 234c, 234d; 334c, 334d; 434c, 434d; 534c, 534d; 634c, 634d).

2. The aircraft (10; 210; 310; 410; 510; 610) as recited in claim 1 wherein, in the biplane orientation, the first wing (14; 214; 314; 414; 514; 614) is an upper wing and the second wing (16; 216; 316; 416; 516; 616) is a lower wing.

3. The aircraft (10; 210; 310; 410; 510; 610) as recited in claim 2 wherein, in the biplane orientation, the first wing (14; 214; 314; 414; 514; 614) is forward of the second wing (16; 216; 316; 416; 516; 616) or wherein, in the biplane orientation, the first wing (14; 214; 314; 414; 514; 614) is aft of the second wing (16; 216; 316; 416; 516; 616).

4. The aircraft (10; 210; 310; 410; 510; 610) as recited in any preceding claim wherein, in the biplane orientation, the first wing (14; 214; 314; 414; 514; 614) has a decalage angle relative to the second wing (16; 216; 316; 416; 516; 616), and preferably wherein, in the biplane orientation, the first wing (14; 214; 314; 414; 514; 614) has a positive decalage angle relative to the second wing (16; 216; 316; 416; 516; 616).

5. The aircraft (10; 210; 310; 410; 510; 610) as recited in any preceding claim wherein, in the biplane orientation, the rotors of the first plurality of propulsion assemblies (34a, 34b; 234a, 234b; 334a, 334b; 434a, 434b; 534a, 534b; 634a, 634b) are forward of the rotors of the second plurality of propulsion assemblies (34c, 34d; 234c, 234d; 334c, 334d; 434c, 434d; 534c, 534d; 634c, 634d), or wherein, in the biplane orientation, the rotors of the first plurality of propulsion assemblies (34a, 34b; 234a, 234b; 334a, 334b; 434a, 434b; 534a, 534b; 634a, 634b) are aft of the rotors of the second plurality of propulsion assemblies (34c, 34d; 234c, 234d; 334c, 334d; 434c, 434d; 534c, 534d; 634c, 634d).

6. The aircraft (10; 210; 310; 410; 510; 610) as recited in any preceding claim wherein the propulsion assemblies of the first plurality of propulsion assemblies (34a, 34b; 234a, 234b; 334a, 334b; 434a, 434b; 534a, 534b; 634a, 634b) are laterally offset relative to the propulsion assemblies of the second plurality of propulsion assemblies (34c, 34d; 234c, 234d; 334c, 334d; 434c, 434d; 534c, 534d; 634c, 634d).

7. The aircraft (10; 210; 310; 410; 510; 610) as recited in any preceding claim wherein the propulsion assemblies of the first plurality of propulsion assemblies (34a, 34b; 234a, 234b; 334a, 334b; 434a, 434b; 534a, 534b; 634a, 634b) are laterally offset inboard relative to the propulsion assemblies of the second plurality of propulsion assemblies (34c, 34d; 234c, 234d; 334c, 334d; 434c, 434d; 534c, 534d; 634c, 634d), or wherein the propulsion assemblies of the first plurality of propulsion assemblies (34a, 34b; 234a, 234b; 334a, 334b; 434a, 434b; 534a, 534b; 634a, 634b) are laterally offset outboard relative to the propulsion assemblies of the second plurality of propulsion assemblies (34c, 34d; 234c, 234d; 334c, 334d; 434c, 434d; 534c, 534d; 634c, 634d).

8. The aircraft (10; 210; 310; 410; 510; 610) as recited in any preceding claim wherein a gap between the first wing (14; 214; 314; 414; 514; 614) and the second wing (16; 216; 316; 416; 516; 616) has a length G and wherein a radius of each of the rotors is greater than G.

9. The aircraft (10; 210; 310; 410; 510; 610) as recited in any preceding claim wherein each of the rotors shares a common radius.

10. The aircraft (10; 210; 310; 410; 510; 610) as recited in any one of claims 1 to 8 wherein the rotors of the first plurality of propulsion assemblies (34a, 34b; 234a, 234b; 334a, 334b; 434a, 434b; 534a, 534b; 634a, 634b) have a different radius than the rotors of the second plurality of propulsion assemblies (34c, 34d; 234c, 234d; 334c, 334d; 434c, 434d; 534c, 534d; 634c, 634d).

11. The aircraft (10; 210; 310; 410; 510; 610) as recited in any preceding claim wherein each of the tail surfaces (40a, 40b; 240a, 240b; 340a, 340b; 440a, 440b; 540) is a ruddervator.

12. The aircraft (10; 210; 310; 410; 510; 610) as recited in any preceding claim, further comprising a pod assembly (22; 222; 322; 422; 522; 622) coupled between the first (18; 218; 318; 418; 518; 618) and second (20; 220; 320; 420; 520; 620) swept pylons.

## Patentansprüche

1. Flugzeug (10; 210; 310; 410; 510; 610), das so betrieben werden kann, dass es zwischen schubgestütztem Auftrieb in einer VTOL-Ausrichtung und tragflügelgestütztem Auftrieb in einer Doppeldecker-Ausrichtung übergeht, wobei das Flugzeug (10; 210; 310; 410; 510; 610) umfasst:
eine Flugzeugzelle (12; 212; 312; 412; 512; 612), die einen ersten (14; 214; 314; 414; 514; 614) und einen zweiten (16; 216; 316; 416; 516; 616) Tragflügel in einer gestaffelten Konfiguration mit einem ersten (18; 218; 318; 418; 518; 618) und einem zweiten (20; 220; 320; 420; 520; 620) gepfeilten Pylon, die sich dazwischen erstrecken, aufweist;
eine verteilte Schubanordnung, die an der Flugzeugzelle angebracht ist, wobei die Schubanordnung eine erste Vielzahl von Antriebsanordnungen (34a, 34b; 234a, 234b; 334a, 334b; 434a, 434b; 534a, 534b; 634a, 634b), die mit dem ersten Tragflügel (14; 214; 314; 414; 514; 614) gekoppelt sind, und eine zweite Vielzahl von Antriebsanordnungen (34c, 34d; 234c, 234d; 334c, 334d; 434c, 434d; 534c, 534d; 634c, 634d), die mit dem zweiten Tragflügel (16; 216; 316; 416; 516; 616) gekoppelt sind, einschließt, wobei jede der Antriebsanordnungen (34a-d; 234a-d; 334a-d; 434a-d; 534a-d; 634a-d) einen Heckausleger (38a-d; 238a-d; 338a-d; 438a-d; 538a-d; 638a-d) einschließt;
eine Vielzahl von Leitwerksflächen (40a, 40b; 240a, 240b; 340a, 340b; 440a, 440b; 540), die sich jeweils zwischen den Heckauslegern (38a-d; 238a-d; 338a-d; 438a-d; 538a-d; 638a-d) einer der Antriebsanordnungen der ersten Vielzahl von Antriebsanordnungen (34a, 34b; 234a, 234b; 334a, 334b; 434a, 434b; 534a, 534b; 634a, 634b) und einer der Antriebsanordnungen der zweiten Vielzahl von Antriebsanordnungen (34c, 34d; 234c, 234d; 334c, 334d; 434c, 434d; 534c, 534d; 634c, 634d) erstrecken; und
ein Flugsteuerungssystem (30), das mit der Flugzeugzelle (12; 212; 312; 412; 512; 612) gekoppelt ist, wobei das Flugsteuerungssystem (30) so konfiguriert ist, dass es jede der Antriebsanordnungen (34a-d; 234a-d; 334a-d; 434a-d; 534a-d; 634a-d) unabhängig steuert;
wobei die erste Vielzahl von Antriebsanordnungen (34a, 34b; 234a, 234b; 334a, 334b; 434a, 434b; 534a, 534b; 634a, 634b) in Längsrichtung relativ zu der zweiten Vielzahl von Antriebsanordnungen (34c, 34d; 234c, 234d; 334c, 334d; 434c, 434d; 534c, 534d; 634c, 634d) versetzt ist, sodass Rotoren der ersten Vielzahl von Antriebsanordnungen (34a, 34b; 234a, 234b; 334a, 334b; 434a, 434b; 534a, 534b; 634a, 634b) in einer anderen Ebene drehen als Rotoren der zweiten Vielzahl von Antriebsanordnungen (34c, 34d; 234c, 234d; 334c, 334d; 434c, 434d; 534c, 534d; 634c, 634d).

2. Flugzeug (10; 210; 310; 410; 510; 610) nach Anspruch 1, wobei in der Doppeldecker-Ausrichtung der erste Tragflügel (14; 214; 314; 414; 514; 614) ein oberer Tragflügel ist und der zweite Tragflügel (16; 216; 316; 416; 516; 616) ein unterer Tragflügel ist.

3. Flugzeug (10; 210; 310; 410; 510; 610) nach Anspruch 2, wobei sich in der Doppeldecker-Ausrichtung der erste Tragflügel (14; 214; 314; 414; 514; 614) vor dem zweiten Tragflügel (16; 216; 316; 416; 516; 616) befindet oder wobei sich in der Doppeldecker-Ausrichtung der erste Tragflügel (14; 214; 314; 414; 514; 614) hinter dem zweiten Tragflügel (16; 216; 316; 416; 516; 616) befindet.

4. Flugzeug (10; 210; 310; 410; 510; 610) nach einem vorstehenden Anspruch, wobei in der Doppeldecker-Ausrichtung der erste Tragflügel (14; 214; 314; 414; 514; 614) einen Schränkungswinkel relativ zu dem zweiten Tragflügel (16; 216; 316; 416; 516; 616) aufweist, und wobei bevorzugt in der Doppeldecker-Ausrichtung der erste Tragflügel (14; 214; 314; 414; 514; 614) einen positiven Schränkungswinkel relativ zu dem zweiten Tragflügel (16; 216; 316; 416; 516; 616) aufweist.

5. Flugzeug (10; 210; 310; 410; 510; 610) nach einem vorstehenden Anspruch, wobei sich in der Doppeldecker-Ausrichtung die Rotoren der ersten Vielzahl von Antriebsanordnungen (34a, 34b; 234a, 234b; 334a, 334b; 434a, 434b; 534a, 534b; 634a, 634b) vor den Rotoren der zweiten Vielzahl von Antriebsanordnungen (34c, 34d; 234c, 234d; 334c, 334d; 434c, 434d; 534c, 534d; 634c, 634d) befinden, oder wobei sich in der Doppeldecker-Ausrichtung die Rotoren der ersten Vielzahl von Antriebsanordnungen (34a, 34b; 234a, 234b; 334a, 334b; 434a, 434b; 534a, 534b; 634a, 634b) hinter den Rotoren der zweiten Vielzahl von Antriebsanordnungen (34c, 34d; 234c, 234d; 334c, 334d; 434c, 434d; 534c, 534d; 634c, 634d) befinden.

6. Flugzeug (10; 210; 310; 410; 510; 610) nach einem vorstehenden Anspruch, wobei die Antriebsanordnungen der ersten Vielzahl von Antriebsanordnungen (34a, 34b; 234a, 234b; 334a, 334b; 434a, 434b; 534a, 534b; 634a, 634b) relativ zu den Antriebsanordnungen der zweiten Vielzahl von Antriebsanordnungen (34c, 34d; 234c, 234d; 334c, 334d; 434c, 434d; 534c, 534d; 634c, 634d) seitlich versetzt sind.

7. Flugzeug (10; 210; 310; 410; 510; 610) nach einem vorstehenden Anspruch, wobei die Antriebsanordnungen der ersten Vielzahl von Antriebsanordnungen (34a, 34b; 234a, 234b; 334a, 334b; 434a, 434b; 534a, 534b; 634a, 634b) relativ zu den Antriebsanordnungen der zweiten Vielzahl von Antriebsanordnungen (34c, 34d; 234c, 234d; 334c, 334d; 434c, 434d; 534c, 534d; 634c, 634d) seitlich innenbords versetzt sind, oder wobei die Antriebsanordnungen der ersten Vielzahl von Antriebsanordnungen (34a, 34b; 234a, 234b; 334a, 334b; 434a, 434b; 534a, 534b; 634a, 634b) relativ zu den Antriebsanordnungen der zweiten Vielzahl von Antriebsanordnungen (34c, 34d; 234c, 234d; 334c, 334d; 434c, 434d; 534c, 534d; 634c, 634d) seitlich außenbords versetzt sind.

8. Flugzeug (10; 210; 310; 410; 510; 610) nach einem vorstehenden Anspruch, wobei ein Spalt zwischen dem ersten Tragflügel (14; 214; 314; 414; 514; 614) und dem zweiten Tragflügel (16; 216; 316; 416; 516; 616) eine Länge G aufweist und wobei ein Radius jedes der Rotoren größer als G ist.

9. Flugzeug (10; 210; 310; 410; 510; 610) nach einem vorstehenden Anspruch, wobei jeder der Rotoren einen gemeinsamen Radius hat.

10. Flugzeug (10; 210; 310; 410; 510; 610) nach einem der Ansprüche 1 bis 8, wobei die Rotoren der ersten Vielzahl von Antriebsanordnungen (34a, 34b; 234a, 234b; 334a, 334b; 434a, 434b; 534a, 534b; 634a, 634b) einen anderen Radius aufweisen als die Rotoren der zweiten Vielzahl von Antriebsanordnungen (34c, 34d; 234c, 234d; 334c, 334d; 434c, 434d; 534c, 534d; 634c, 634d).

11. Flugzeug (10; 210; 310; 410; 510; 610) nach einem vorstehenden Anspruch, wobei jede der Leitwerksflächen (40a, 40b; 240a, 240b; 340a, 340b; 440a, 440b; 540) ein kombiniertes Seiten- und Höhenruder ist.

12. Flugzeug (10; 210; 310; 410; 510; 610) nach einem vorstehenden Anspruch, weiter umfassend eine Gondelanordnung (22; 222; 322; 422; 522; 622), die zwischen den ersten (18; 218; 318; 418; 518; 618) und den zweiten (20; 220; 320; 420; 520; 620) gepfeilten Pylon gekoppelt ist.

## Revendications

1. Aéronef (10 ; 210 ; 310 ; 410 ; 510 ; 610) opérationnel pour effectuer une transition entre une portance par poussée dans une orientation VTOL et une portance par les ailes dans une orientation biplan, l'aéronef (10 ; 210 ; 310 ; 410 ; 510 ; 610) comprenant :
une cellule (12 ; 212 ; 312; 412 ; 512 ; 612) présentant des première (14 ; 214 ; 314; 414; 514; 614) et seconde (16 ; 216 ; 316; 416; 516; 616) ailes dans une configuration étagée avec des premier (18 ; 218 ; 318 ; 418 ; 518 ; 618) et second (20 ; 220 ; 320 ; 420 ; 520 ; 620) pylônes en flèche s'étendant entre celles-ci ;
un réseau de poussée distribué fixé à la cellule, le réseau de poussée incluant une première pluralité d'ensembles propulsifs (34a, 34b ; 234a, 234b ; 334a, 334b ; 434a, 434b ; 534a, 534b ; 634a, 634b) couplés à la première aile (14 ; 214 ; 314 ; 414 ; 514 ; 614) et une seconde pluralité d'ensembles propulsifs (34c, 34d ; 234c, 234d ; 334c, 334d ; 434c, 434d ; 534c, 534d ; 634c, 634d) couplés à la seconde aile (16 ; 216 ; 316 ; 416 ; 516 ; 616), chacun des ensembles propulsifs (34a-d ; 234a-d ; 334a-d ; 434a-d ; 534a-d ; 634a-d) incluant une poutre de queue (38a-d ; 238a-d ; 338a-d ; 438a-d ; 538a-d ; 638a-d) ;
une pluralité de surfaces de queue (40a, 40b ; 240a, 240b ; 340a, 340b ; 440a, 440b ; 540) s'étendant chacune entre les poutres de queue (38a-d ; 238a-d ; 338a-d ; 438a-d ; 538a-d ; 638a-d) de l'un des ensembles propulsifs de la première pluralité d'ensembles propulsifs (34a, 34b ; 234a, 234b ; 334a, 334b ; 434a, 434b ; 534a, 534b ; 634a, 634b) et de l'un des ensembles propulsifs de la seconde pluralité d'ensembles propulsifs (34c, 34d ; 234c, 234d ; 334c, 334d ; 434c, 434d ; 534c, 534d ; 634c, 634d) ; et
un système de commande de vol (30) couplé à la cellule (12 ; 212 ; 312 ; 412 ; 512 ; 612), le système de commande de vol (30) étant configuré pour commander indépendamment chacun des ensembles propulsifs (34a-d ; 234a-d ; 334a-d ; 434a-d ; 534a-d ; 634a-d) ;
dans lequel la première pluralité d'ensembles propulsifs (34a, 34b ; 234a, 234b; 334a, 334b ; 434a, 434b ; 534a, 534b ; 634a, 634b) est décalée longitudinalement par rapport à la seconde pluralité d'ensembles propulsifs (34c, 34d ; 234c, 234d ; 334c, 334d ; 434c, 434d ; 534c, 534d ; 634c, 634d) de telle sorte que des rotors de la première pluralité d'ensembles propulsifs (34a, 34b ; 234a, 234b ; 334a, 334b ; 434a, 434b ; 534a, 534b ; 634a, 634b) tournent dans un plan différent de celui de rotors de la seconde pluralité d'ensembles propulsifs (34c, 34d ; 234c, 234d ; 334c, 334d ; 434c, 434d ; 534c, 534d ; 634c, 634d).

2. Aéronef (10 ; 210 ; 310 ; 410 ; 510 ; 610) selon la revendication 1, dans lequel, dans l'orientation biplan, la première aile (14; 214; 314; 414; 514; 614) est une aile supérieure et la seconde aile (16 ; 216 ; 316 ; 416 ; 516 ; 616) est une aile inférieure.

3. Aéronef (10 ; 210 ; 310 ; 410 ; 510 ; 610) selon la revendication 2, dans lequel, dans l'orientation biplan, la première aile (14 ; 214 ; 314 ; 414 ; 514 ; 614) est en avant de la seconde aile (16 ; 216 ; 316 ; 416 ; 516 ; 616) ou dans lequel, dans l'orientation biplan, la première aile (14 ; 214 ; 314 ; 414 ; 514 ; 614) est en arrière de la seconde aile (16 ; 216 ; 316; 416 ; 516 ; 616).

4. Aéronef (10; 210; 310; 410; 510; 610) selon une quelconque revendication précédente, dans lequel, dans l'orientation biplan, la première aile (14 ; 214 ; 314 ; 414 ; 514 ; 614) présente un angle de décalage par rapport à la seconde aile (16 ; 216 ; 316 ; 416; 516 ; 616), et de préférence dans lequel, dans l'orientation biplan, la première aile (14 ; 214 ; 314 ; 414 ; 514 ; 614) présente un angle de décalage positif par rapport à la seconde aile (16 ; 216 ; 316 ; 416 ; 516; 616).

5. Aéronef (10; 210; 310; 410; 510; 610) selon une quelconque revendication précédente, dans lequel, dans l'orientation biplan, les rotors de la première pluralité d'ensembles propulsifs (34a, 34b ; 234a, 234b ; 334a, 334b ; 434a, 434b ; 534a, 534b ; 634a, 634b) sont en avant des rotors de la seconde pluralité d'ensembles propulsifs (34c, 34d ; 234c, 234d ; 334c, 334d ; 434c, 434d ; 534c, 534d ; 634c, 634d), ou dans lequel, dans l'orientation biplan, les rotors de la première pluralité d'ensembles propulsifs (34a, 34b ; 234a, 234b ; 334a, 334b ; 434a, 434b ; 534a, 534b ; 634a, 634b) sont en arrière des rotors de la seconde pluralité d'ensembles propulsifs (34c, 34d ; 234c, 234d ; 334c, 334d ; 434c, 434d ; 534c, 534d ; 634c, 634d).

6. Aéronef (10; 210; 310; 410; 510; 610) selon une quelconque revendication précédente, dans lequel les ensembles propulsifs de la première pluralité d'ensembles propulsifs (34a, 34b ; 234a, 234b ; 334a, 334b ; 434a, 434b ; 534a, 534b ; 634a, 634b) sont décalés latéralement par rapport aux ensembles propulsifs de la seconde pluralité d'ensembles propulsifs (34c, 34d ; 234c, 234d ; 334c, 334d ; 434c, 434d ; 534c, 534d ; 634c, 634d).

7. Aéronef (10; 210; 310; 410; 510; 610) selon une quelconque revendication précédente, dans lequel les ensembles propulsifs de la première pluralité d'ensembles propulsifs (34a, 34b ; 234a, 234b ; 334a, 334b ; 434a, 434b ; 534a, 534b ; 634a, 634b) sont décalés latéralement vers l'intérieur par rapport aux ensembles propulsifs de la seconde pluralité d'ensembles propulsifs (34c, 34d ; 234c, 234d ; 334c, 334d ; 434c, 434d ; 534c, 534d ; 634c, 634d), ou dans lequel les ensembles propulsifs de la première pluralité d'ensembles propulsifs (34a, 34b ; 234a, 234b ; 334a, 334b ; 434a, 434b ; 534a, 534b ; 634a, 634b) sont décalés latéralement vers l'extérieur par rapport aux ensembles propulsifs de la seconde pluralité d'ensembles propulsifs (34c, 34d ; 234c, 234d ; 334c, 334d ; 434c, 434d ; 534c, 534d ; 634c, 634d).

8. Aéronef (10; 210; 310; 410; 510; 610) selon une quelconque revendication précédente, dans lequel un espace entre la première aile (14 ; 214 ; 314 ; 414 ; 514 ; 614) et la seconde aile (16 ; 216 ; 316 ; 416 ; 516 ; 616) présente une longueur G, et dans lequel un rayon de chacun des rotors est supérieur à G.

9. Aéronef (10; 210; 310; 410; 510; 610) selon une quelconque revendication précédente, dans lequel chacun des rotors partage un rayon commun.

10. Aéronef (10; 210; 310; 410; 510; 610) selon l'une quelconque des revendications 1 à 8, dans lequel les rotors de la première pluralité d'ensembles propulsifs (34a, 34b ; 234a, 234b ; 334a, 334b ; 434a, 434b ; 534a, 534b ; 634a, 634b) présentent un rayon différent de celui des rotors de la seconde pluralité d'ensembles propulsifs (34c, 34d ; 234c, 234d ; 334c, 334d ; 434c, 434d ; 534c, 534d ; 634c, 634d).

11. Aéronef (10; 210; 310; 410; 510; 610) selon une quelconque revendication précédente, dans lequel chacune des surfaces de queue (40a, 40b ; 240a, 240b ; 340a, 340b ; 440a, 440b ; 540) est une gouverne d'empennage papillon.

12. Aéronef (10; 210; 310; 410; 510; 610) selon une quelconque revendication précédente, comprenant en outre un ensemble nacelle (22 ; 222 ; 322 ; 422 ; 522 ; 622) couplé entre les premier (18 ; 218 ; 318 ; 418 ; 518 ; 618) et second (20 ; 220 ; 320 ; 420 ; 520 ; 620) pylônes en flèche.
